(19) Europäisches Patentamt
European Patent Office
Office européen des brevets

(11) EP 3 406 783 A1

(12) EUROPEAN PATENT APPLICATION
published in accordance with Art. 153(4) EPC

(43) Date of publication:
28.11.2018 Bulletin 2018/48

(51) Int Cl.:
*D06F 37/20* (2006.01)

(21) Application number: 16877798.5

(22) Date of filing: 23.12.2016

(86) International application number:
PCT/CN2016/111800

(87) International publication number:
WO 2017/107988 (29.06.2017 Gazette 2017/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 24.12.2015 JP 2015252202

(71) Applicants:
• Qingdao Haier Washing Machine Co., Ltd.
Shandong 266101 (CN)
• Aqua Co., Ltd
Chiyoda-ku
Tokyo 100-0005 (JP)

(72) Inventors:
• NAGAI, Takayuki
Tokyo 100-0005 (JP)
• HIROSE, Toru
Tokyo 100-0005 (JP)
• NAKAMOTO, Shigeharu
Tokyo 100-0005 (JP)

(74) Representative: Gevers Patents
Intellectual Property House
Holidaystraat 5
1831 Diegem (BE)

(54) **WASHING MACHINE**

(57)     A washing machine not only may properly suppress vibration of an outer drum, but also may be easier to assemble due to a simple structure, thereby realizing reduction of the manufacturing cost. A washing machine including elastic supporting units (5) for elastically supporting the outer drum (3) to a main body (2) includes: a plurality of extension springs (6) to (6) arranged between the outer drum (3) and the main body (2) and capable of applying a counteracting force to the outer drum (3) to enable the outer drum (3) to return to an original position when a displacement of the outer drum (3) is transmitted to the extension springs; and a displacement transmission unit (8) capable of transmitting the displacement of the outer drum (3) to the extension springs (6) to (6) only when the displacement of the outer drum (3) is larger than a specified value. The extension springs (6) have a preset initial tension ($F_p$).

FIG. 1

## Description

## TECHNICAL FIELD

The present invention relates to a washing machine capable of suppressing vibration of a washing and dewatering drum during rotating.

## BACKGROUND

In the past, a well-known washing machine has the following structure: a cylindrical outer drum with a bottom is supported in a tank-shaped main body, and a washing and dewatering drum as an inner drum is rotatably supported at an inner side of the outer drum (for example, see patent literature 1).

In this general washing machine, the outer drum is elastically supported to four portions of the main body through suspensions composed of springs and hoisting rods for hanging the outer drum, so that vibration generated during working is suppressed.

Under a condition of adopting such a structure, a low-order natural vibration number of a vibration form of shaking of the outer drum around a rotating shaft of the washing and dewatering drum occurs at a speed lower than a rotating speed of the washing and dewatering drum. Specifically, an impeller (a stirring wing) is arranged at a bottom of the washing and dewatering drum. During dewatering, the washing and dewatering drum and the impeller rotate integrally at a high speed in the outer drum. In a process of starting rotation of the washing and dewatering drum and speeding up the rotation, the vibration is temporarily strengthened when the rotating speed of the washing and dewatering drum is consistent with the above-mentioned low-order natural vibration number. With further increase of the rotating speed of the washing and dewatering drum and separation from the low-order natural vibration number, the vibration is weakened, so that the washing machine may work stably at a set rotating speed.

However, it can be conceived that under conditions that washings which are put into the washing and dewatering drum are deflected and an unbalance around the rotating shaft is large, the vibration of the outer drum is strengthened, and particularly under the low-order natural vibration number, the outer drum shakes sharply and is in contact with the interior of the main body. Furthermore, the following potential hazard exists: the entire washing machine generates large noise and sharp vibration, so that an environment around an arrangement place of the washing machine is worsened, and components constituting the washing machine are damaged.

To suppress the above-mentioned unfavorable conditions, it may generally consider reserving a certain clearance between the outer drum and the main body to reduce collision between the outer drum and the main body. Moreover, it also may consider controlling to stop rotation or correct the deflection of the washings if extremely sharp vibration is detected.

However, under a condition that the certain clearance is reserved between the outer drum and the main body, the outer drum must be miniaturized relative to the main body since a large useless space is required inside the main body. In addition, under a condition of executing a vibration countermeasure through control, a vibration detection unit and complicated control are needed, resulting in increase of the cost.

Therefore, to solve the above-mentioned problems, it can consider using a technology described in the following patent literature 2. Patent literature 2 discloses the following structure: a ring is disposed coaxially in such a state that an outer side of the outer drum of the washing machine has a clearance, and a leaf spring is arranged on the outer side of the ring (see paragraphs 0094 and 0095, FIG. 19D and FIG. 19E). In a state of moving the leaf spring under a pre-applied pressure, the leaf spring is maintained by a retainer. If the displacement is excessive and may not be limited by the retainer, a high elastic force including the pressure may be applied.

Therefore, in the technology described in patent literature 2, when the rotating speed of the washing and dewatering drum is close to the low-order natural vibration number and the outer drum shakes sharply and is in contact with the ring, the outer drum is in a state of being supported by the springs of the suspensions and supported through the elastic force of the leaf spring arranged on the ring, so that the vibration may be weakened by changing the low-order natural vibration number.

However, in the above patent literature 2, in such a state that one end of the leaf spring is fixed and is compressed (moved) with an applied pressure, the other end of the leaf spring is locked by the retainer, and a part close to a central part of the leaf spring is abutted against the ring. It is very difficult to abut the central part with the ring when both ends of the leaf spring are applied with relative displacements and pressure. To realize the abutment, fine position adjustment is required in combination with real objects, so that the manufacturing cost is increased.

Further, since the above-mentioned fine position adjustment is needed, a mechanism for supporting the leaf spring and a mechanism for supporting the ring become complicated, and the manufacturing cost is further increased.

Related Technical Literature

Patent Literature

Patent Literature 1: Japanese Laid-Open Patent Publication No. 2011-240041
Patent Literature 2: Japanese Specifically Permitted No. 3984630

**SUMMARY**

Problems to be solved by the disclosure

The present invention aims to effectively solve these problems. Specifically, the present invention aims to provide a washing machine which not only may properly suppress vibration of an outer drum and narrow a clearance between the outer drum and a main body, but also may be easier to assemble due to a simple structure, thereby realizing reduction of the manufacturing cost.

Solution for solving the problems

The present invention adopts the following solution to achieve the objective.
The washing machine of the present invention includes: a main body having an internal space; an outer drum arranged in the internal space of the main body; an inner drum arranged in the outer drum and supported in a free rotation manner; a motor disposed on the outer drum and capable of enabling the inner drum to rotate; and elastic supporting units for elastically supporting the outer drum to the main body. The washing machine includes: extension springs arranged between the outer drum and the main body and capable of applying a counteracting force to the outer drum to enable the outer drum to return to an original position when a displacement of the outer drum is transmitted to the extension springs; and a displacement transmission unit capable of transmitting the displacement of the outer drum to the extension springs only when the displacement of the outer drum is larger than a specified value. The extension springs have a preset initial tension.
In this case, the extension springs include at least one group of spring bodies arranged in a manner of being in axial symmetry about the rotating shaft of the inner drum. Each spring body is formed by combining a pair of spring elements. Each spring element includes a spring main body having the preset initial tension and at least one flexible rope constituting the displacement transmission unit. Preferably, one end of each spring element of each spring body is mounted at a corner part of the main body, and the other end of each spring element is fixed in a different approximately-tangential direction of the outer drum.
In addition, the washing machine of the present invention includes: a main body having an internal space; an outer drum arranged in the internal space of the main body; an inner drum arranged in the outer drum and supported in a free rotation manner; a motor disposed on the outer drum and capable of enabling the inner drum to rotate; and elastic supporting units for elastically supporting the outer drum to the main body. The washing machine includes: extension springs arranged between the outer drum and the main body and capable of applying a counteracting force to the outer drum to enable the outer drum to return to an original position when a displacement of the outer drum is transmitted; a displacement transmission unit capable of transmitting the displacement of the outer drum to the extension springs only when the displacement of the outer drum is large enough to be greater than a specified value; and attenuation apparatuses for attenuating the displacement transmitted by the displacement transmission unit. The extension springs have a preset initial tension.
In this case, the extension springs include at least one group of spring bodies arranged in a manner of being in axial symmetry about the rotating shaft of the inner drum. Each spring body is formed by combining a pair of spring elements. Each spring element includes a spring main body having the preset initial tension and at least one flexible rope constituting each displacement transmission unit. Preferably, one end of each spring element of each spring body is mounted at a corner part of the main body, and the other end of each spring element is fixed in a different approximately tangential direction of the outer drum.

Effects of the invention

According to the present invention described above, when the motor enables the inner drum to rotate, and the outer drum shakes sharply since the rotating speed is close to a natural vibration number of the outer drum, elastomers arranged at the periphery of the outer drum are in contact with the interior of the main body, thereby changing the natural vibration number and weakening the vibration.

Specifically, the natural vibration number of a vibration form of the shaking of the outer drum is determined by elastic supporting strength (a spring constant) of the elastic supporting units that support the outer drum. The outer drum vibrates in a manner of sharp shaking since the rotating speed is close to the natural vibration number. Under a condition that the displacement of the outer drum is greater than the specified value, the displacement of the outer drum is transmitted to the extension springs through the displacement transmission unit, so that the counteracting force may be generated through the extension springs and applied to the outer drum. At this time, since the extension springs are imparted with the initial tension in advance, a high counteracting force may be generated sharply to the outer drum. Therefore, the natural vibration number may be changed through a sharp change of the elastic supporting strength of the outer drum, thereby suppressing the vibration of the outer drum. The inner drum may be further accelerated to a specified rotating frequency.

In this way, since the vibration caused by the natural vibration number of the outer drum may be weakened before the amplitude becomes too large, the inner drum may be accelerated to a specified rotating speed, so that noise and vibration may be prevented, and a phenomenon that an environment of an arrangement place becomes poor is suppressed. Then, the extension springs are used as the elastomers for changing the elastic supporting strength of the outer drum, so that structures imparted with the initial tension may be easily realized and are easy to adjust, and the manufacturing cost may be reduced.

In addition, according to the present invention in which a pair of spring elements connected to the tangential direction of the outer drum forms one spring body and at least one group of spring bodies are disposed around the rotating shaft, a counteracting force for counteracting the vibration of the outer drum in a rotating direction also may be applied, so as to enable the inner drum to work more stably.

In another aspect, according to the present invention using the attenuation apparatuses, compared with the structure only using the extension springs having the initial tension, this structure can further reduce the maximum value of resonance.

In this case, according to the present invention in which a pair of spring elements connected to the tangential direction of the outer drum forms one spring body and at least one group of spring bodies are disposed about the rotating shaft, a counteracting force for counteracting vibration in a rotating direction of the outer drum also may be applied, so as to enable the inner drum to work more stably.

## BRIEF DESCRIPTION OF DRAWINGS

FIG. 1 is a longitudinal section view illustrating a washing machine according to a first embodiment of the present invention;

FIG. 2 is a view of a cross section of FIG. 1 along A-A;

FIG. 3 is a diagram illustrating an initial tension of the same washing machine;

FIG. 4 is a diagram schematically illustrating a force applied to an outer drum of the same washing machine;

FIG. 5 is a diagram illustrating a relationship between the force applied to the same outer drum and a displacement;

FIG. 6 is a longitudinal section view illustrating a washing machine according to a second embodiment of the present invention;

FIG. 7 is a longitudinal section view illustrating a state after the outer drum moves from a state in FIG. 6 in a horizontal direction;

FIG. 8 is a view of a cross section of FIG. 6 along A-A;

FIG. 9 is a diagram illustrating spring elements used in the same washing machine;

FIG. 10 is a longitudinal section view illustrating a washing machine according to a third embodiment of the present invention;

FIG. 11 is a view of a cross section of FIG. 10 along A-A;

FIG. 12 is a diagram illustrating a state after part of a strip-shaped body removed from a state in FIG. 11 is simplified;

FIG. 13 is a diagram illustrating a state that the outer drum moves from a state in FIG. 12 in a horizontal direction;

FIG. 14 is a longitudinal section view illustrating a washing machine according to a fourth embodiment of the present invention;

FIG. 15 is a longitudinal section view illustrating a washing machine according to a fifth embodiment of the present invention;

FIG. 16 is a view of a cross section of FIG. 15 along A-A;

FIG. 17 is a longitudinal section view illustrating a state after the outer drum moves from a state in FIG. 16 towards a rotating direction; and

FIG. 18 is a diagram illustrating a pressurization setting unit for imparting the initial tension.

**DETAILED DESCRIPTION**

Embodiments of the present invention are described below with reference to drawings.

(First embodiment)

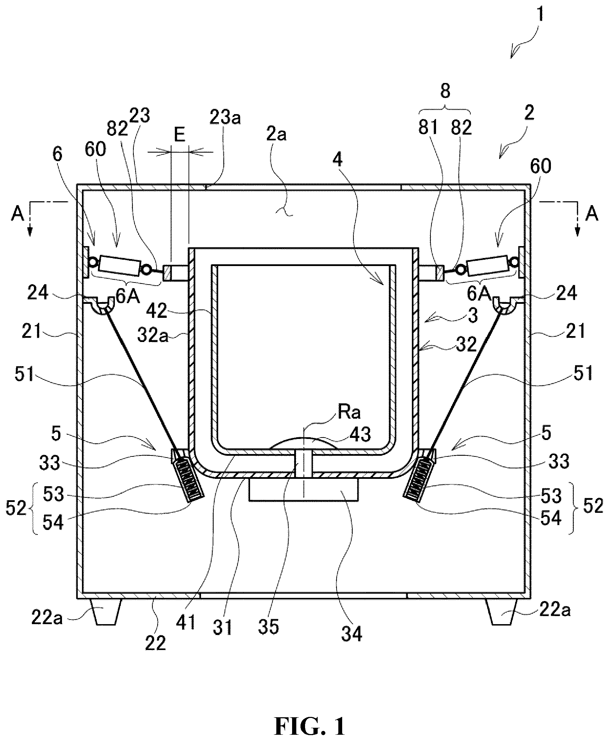

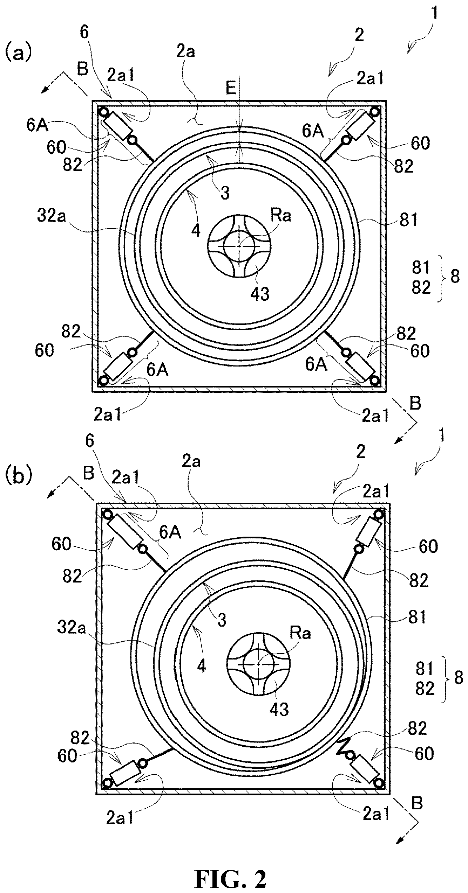

FIG. 1 is a longitudinal section view illustrating a washing machine 1 according to a first embodiment of the present invention. FIG. 2(a) is a sectional view of a position A-A in FIG. 1. FIG. 1 illustrates a cross section of a position B-B (namely a diagonal position) in FIG. 2(a). In addition, FIG. 2(b), as described below, illustrates a state after an outer drum 3 moves. FIG. 1 and FIG. 2 show general structures of a washing machine 1, and portions irrelevant to the present invention are omitted. Then, in FIG. 2, elastic supporting units 5, as described below, in FIG. 1 are omitted.

The washing machine 1 includes: a main body 2, an outer drum 3, a washing and dewatering drum 4 used as an inner drum, and elastic supporting units 5 to 5.

The main body 2 has an internal space 2a. The internal space is in an approximately cuboid shape enclosed by a lower plate 22 which is approximately square when seen from the top, side plates 21 to 21 which are erected from an edge part of the lower plate 22 and form four surfaces, and an upper plate 23 connected with upper parts of the side plates 21 to 21, and has the approximately cubic internal space 2a encircled by these plates.

The side plates 21 and the lower plate 22 are made of metal plates. The upper plate 23 is made of resin. Feet 22a to 22a for placing the main body 2 on the ground are arranged at positions close to four corners of a lower surface of the lower plate 22. The above-mentioned upper plate 23 is provided with an approximately circular opening 23a for putting washings into and taking the washings out of the washing and dewatering drum 4. In addition, the upper plate 23 may be mounted on and detached from the side plates 21, so that the outer drum 3 may be easily arranged into the internal space 2a of the main body 2. In addition, the upper plate 23 may be integrated with an operation panel for operating the washing machine 1.

The outer drum 3 is made of synthetic resin with heat resisting property, and is a bottomed cylindrical component provided with a bottom plate 31 which is approximately circular when seen from the top and a side plate 32 erected from the edge of the bottom plate 31. The outer drum 3 is hung in the internal space 2a of the main body through the elastic supporting units 5. Four positions of the lower part of the side plate 32 are provided with clamping parts 33 for mounting the elastic supporting units 5.

The washing and dewatering drum 4 is made of metal, and is a bottomed cylindrical component provided with a bottom plate 41 which is approximately circular when seen from the top and a side plate 42 erected from the edge of the bottom plate 41. The washing and dewatering drum 4 in the outer drum 3 is coaxial with the outer drum 3, and is supported by the outer drum 3 in a free rotation manner. The side plate 42 and the bottom plate 41 are provided with a plurality of openings (not shown), and water in the washing and dewatering drum 4 may be drained through the openings.

The washing and dewatering drum 4 rotates in such a manner that a motor 34 enables a driving shaft 35 extending towards an upper surface side of the bottom plate 31 to rotate. In addition, the motor 34 also provides a driving force for an impeller (a stirring wing) 43 arranged in a center of the bottom plate 41 of the washing and dewatering drum 4 via a transmission unit (not shown) to enable the impeller 43 to rotate. Therefore, the washing machine 1 may mainly enable only the impeller 43 to rotate during washing, and enable the washing and dewatering drum 4 and the impeller 43 to rotate integrally at a high speed during dewatering.

A rotating center of the impeller 43 and a rotating center of the washing and dewatering drum 4 are designed to be the same rotating shaft Ra arranged along a vertical direction. It should be noted that the rotating shaft Ra also penetrates through the center of the bottom plate 41 of the washing and dewatering drum 4 and the center of the bottom plate 31 of the outer drum 3.

The elastic supporting units 5 to 5 are used to hang the outer drum 3. In the present embodiment, four elastic supporting units 5 to 5 are arranged, each being composed of a hoisting rod 51 and a suspension 52 mounted at the top end of the hoisting rod 51. The suspension 52 is provided with an outer pipe 53 and a compression spring 54 arranged in the outer pipe 53. Hoisting rod mounting parts 24 to 24 are respectively arranged at four corners 2a1 to 2a1 (see

FIG. 2) of the upper part of the internal space 2a of the main body 2. Basal end sides of the hoisting rods 51 are mounted on the hoisting rod mounting parts 24 to 24. Then, the outer pipes 53 of the suspensions 52 are clamped with the clamping parts 33 in a manner of being hung on the clamping parts 33 of the outer drum 3. In this way, the outer drum 3 is hung in the internal space 2a through the four elastic supporting units 5 to 5.

The compression spring 54 of each elastic supporting unit 5 elastically supports the outer drum 3 when compressed to generate a counteracting force by the weight of the outer drum 3 and absorb a displacement. Then, the four elastic supporting units 5 to 5 respectively hang the outer drum 3 slantways, so as to jointly exert an effect of enabling a direction of the outer drum 3 located in the center of the main body 2 to be kept balanced.

Namely, the elastic supporting units 5 not only may generate elasticity of the compression springs 54 of the suspensions 52, but also may generate resilience for enabling the hung outer drum 3 to return to the center like a vibrator according to a position relation. Therefore, under a condition that the outer drum 3 has a displacement from the central position, the outer drum 3 obtains the resilience corresponding to the displacement through the elastic supporting units 5, and returns to the central position of the main body 2 through the resilience.

Here, as mentioned above, through the use of the elastic supporting units 5 to elastically support the outer drum 3, a low-order natural vibration number corresponding to a vibration form of shaking of the outer drum 3 around the rotating shaft Ra appears in an extremely low rotating speed region at about 2 to 3 Hz. Such a phenomenon that the washing and dewatering drum 4 and the impeller 43 rotate together at the high speed may cause the vibration most easily in the washing machine 1. Although the washing and dewatering drum 4 and the impeller 43 rotate at a specified operating speed which is high enough relative to the low-order natural vibration number, the outer drum 3 may vibrate sharply in a manner of shaking around the rotating shaft Ra within a period from the start to acceleration or within a period of slowing down the operation under a condition that the rotating speed of the washing and dewatering drum 4 is consistent with or close to the low-order natural vibration number. Then, under a condition that the washings put into the washing and dewatering drum 4 are deflected, the washing and dewatering drum 4 comes to an unbalanced state around the rotating shaft Ra and an excitation force is increased, so that the vibration of the outer drum 3 is further strengthened.

Therefore, to suppress the vibration of the outer drum 3 to a smaller degree, as shown in FIG. 1 and FIG. 2(a), the washing machine 1 of the present embodiment further includes: four extension springs 6 to 6 which apply a counteracting force to the outer drum 3 to enable the outer drum 3 to return to an original position since the displacement of the outer drum 3 is transmitted to the extension springs, and are imparted with an initial tension to achieve the above-mentioned objective; and a displacement transmission unit 8 capable of transmitting the displacement of the outer drum 3 to the extension springs 6 only when the displacement of the outer drum 3 is larger than a specified value.

As disposed at the corner parts 2a1, which are often useless spaces, of the main body 2, all the extension springs 6 to 6 have functions of suppressing the vibration, and also may suppress enlargement of the entire apparatus.

The displacement transmission unit 8 is composed of an annular vibration limiting member 81 and four flexible ropes 82 to 82 for supporting the vibration limiting member 81. The vibration limiting member 81 may be made of metal or resin. The flexible ropes 82 are composed of ropes made of metal difficult to extend and retract. Due to the flexibility, force transmission only occurs in an extension direction, and basically does not occur in a compression direction.

The flexible ropes 82 to 82 are arranged between positions close to the upper part of the outer drum 3 and the corner parts 2a1. One end of each of the flexible ropes 82 to 82 is connected with respective one of four parts of the vibration limiting member 81, and the other end of each of the flexible ropes 82 to 82 is connected with respective one of the extension springs 6 to 6. Then, all the extension springs 6 to 6 are connected with the corner parts 2a1 to 2a1 of the main body 2. Therefore, the vibration limiting member 81 is supported by the four corners (the corner parts 2a1 to 2a1) of the main body 2 through the extension springs 6 to 6 and the flexible ropes 82 to 82. The vibration limiting member 81 at a position close to the upper part of the outer drum 3 is coaxial with the outer drum 3. An approximately equal clearance E is formed between the vibration limiting member 81 and the peripheral surface 32a of the outer drum 3 in a manner of traversing the whole circumference.

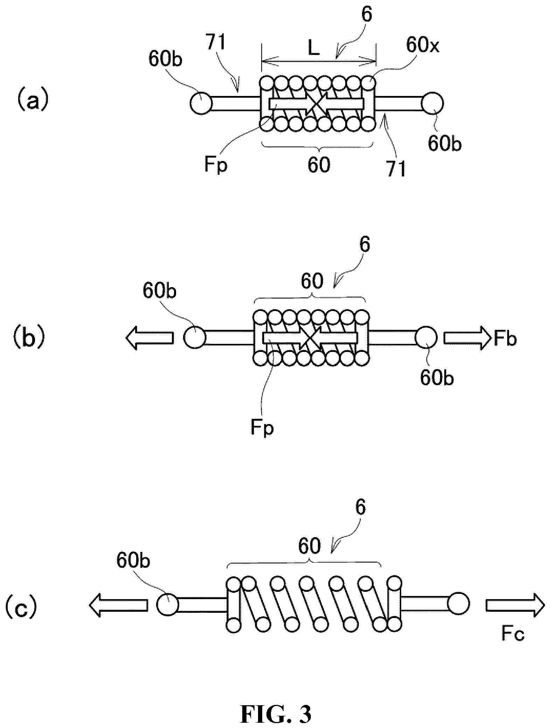

FIG. 3 is a sectional view illustrating an extension spring 6. Specifically, the extension spring 6 uses an extension coil type spring member 60x made of a metal wire in a spring main body 60, so that FIG. 3(a) illustrates a situation that the spring member 60x of the spring main body 60 of the extension spring 6 is in a state having a natural length L. In this figure, the arrow Fp represents a preset initial tension of the spring member. In addition, the arrow Fb in FIG. 3(b) represents a situation where a drawing force equal to the initial tension Fp is applied, and the arrow Fc in FIG. 3(c) represents a situation where a drawing force exceeding the initial tension Fp is applied. The extension spring 6 may not extend from the natural length L as shown in Fig. 3(a) and FIG. 3(b) only if the drawing force does not exceed the initial force Fp, and may start to extend as shown in FIG. 3(c) if the drawing force Fc exceeding the initial tension Fp is applied.

Both ends of the spring main body 60 constituting the extension spring 6 are provided with mounting parts 60b through spring retaining portions 71, and the mounting parts 60b are connected with at least one flexible rope 82 constituting the displacement transmission unit 8 as shown in FIG. 1, so as to form a "spring element" 6A to exert the function. The flexible rope 82 also may be connected to both sides. The same applies for the followings.

One side of each spring retaining portion 71 is connected with the outer drum 3 by using the above-mentioned flexible rope 82 mounted on one mounting part 60b (see FIG. 2), and the other side of each spring retaining portion 71 is mounted on each corner part 2a1 of the main body 2 by using the other mounting part 60b (see FIG. 2). Therefore, as shown in FIG. 2, the vibration limiting member 81 is supported by the four corners (the corner parts 2a1 to 2a1) of the main body 2 through the spring elements 6A.

In this way, the vibration limiting member 81 is supported through the four spring elements 6A to 6A having the initial tension. At this time, since lengths of all the flexible ropes 82 are a little excessive, the extension springs 6 to 6 still may not extend even in the state of supporting the vibration limiting member 81.

In FIG. 2(a), as mentioned above, since the vibration limiting member 81 is arranged in a manner of keeping the clearance E from the periphery of the outer drum 3, when the outer drum 3 has a displacement greater than the clearance E towards a horizontal direction (a lower right direction in the example in the figure) as shown in FIG. 2(b), a peripheral surface 32a of the outer drum 3 is abutted against the vibration limiting member 81. At this time, the displacement of the outer drum 3 is transmitted to the extension spring 6 located on the side (the upper left side in the example in the figure) opposed to the displacement direction of the outer drum 3 through the vibration limiting member 81 and the flexible rope 82 which constitute the displacement transmission unit 8. It should be noted that although the looseness of the flexible rope 82 mounted opposed to this flexible rope 82 is increased, no force would be applied to the connected extension spring 6.

Even under a condition that the spring main body 60 of the extension spring 6 has a slight extension exceeding the natural length since the displacement of the outer drum 3 is transmitted to the spring main body 60, within this range, the force which is applied to the spring main body 60 of the extension spring 6 and is equal to the initial tension Fp 6 also may act on the both ends of the extension spring 6, and the force for pulling the outer drum 3 back to the original position may be applied to the outer drum 3 through the vibration limiting member 81.

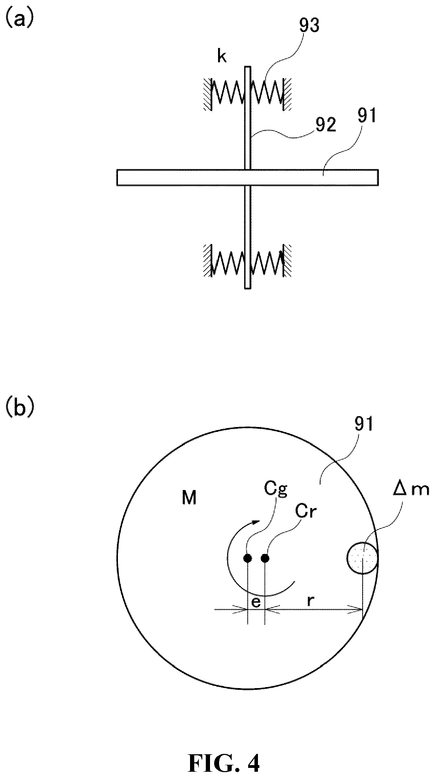

FIG. 4(a) and FIG. 4(b) are diagrams schematically illustrating the structure of the washing machines 1 according to the present embodiment. The force acting on the outer drum 3 of the washing machine 1 is described below with reference to FIG. 1, FIG. 4(a) and FIG. 4(b).

Firstly, the outer drum 3 is hung through the above-mentioned four elastic supporting units 5 to 5, so that resilience k×e capable of enabling the outer drum 3 to return to the center is generated in correspondence to a displacement e from the center. Here, k is a spring constant when the resilience from the elastic supporting units 5 to 5 to the central direction is considered as the elastic force (see FIG. 4(a)). The spring constant k also may be the elastic supporting strength elastically supporting the outer drum 3.

Then, under conditions that the mass of the outer drum 3 is set to be M, and the outer drum 3 does shaking motion around a rotating center Cr which is far away from the center-of-gravity Cg at a distance (displacement) e, an inertia force $M \times \omega^2 \times e$ (a centrifugal force) towards an outer diameter direction is generated. Here, $\omega$ is an angular frequency of the outer drum 3 during shaking, and is equal to an angular frequency $\omega$ of the washing and dewatering drum 4 during rotating. In addition, an unbalance of a rotating portion, which is the washing and dewatering drum 4 (see FIG. 2), inside the outer drum 3 is set to be $\Delta m$, and a distance from the rotating center Cr is set to be r, so that the inertia force (the centrifugal force) generated by the unbalance is $\Delta m \times r \times \omega^2$.

Therefore, under a condition of considering a force balance according to these situations, a relation as shown in the following formula is obtained.

$$M \times \omega^2 \times e + \Delta m \times r \times \omega^2 = k \times e \quad \text{...... Formula (1)}$$

The above formula is transformed to obtain the following formula.

$$e = \Delta m \times r \times \omega^2 / M \times \omega^2 - k \quad \text{...... Formula (2)}$$

According to Formula (2), under a condition of reaching a rotating speed that satisfies $M \times \omega^2 - k = 0$, the displacement e reaches a maximal value, i.e., a resonance state with increased vibration is realized.

Then, if a force generated on the left of Formula (1) is set to be an inertia force Fi, and an elastic force generated on the right side of the equal sign is set to be Fk, the following formulas are obtained:

$$Fi = M \times \omega^2 \times e + \Delta m \times r \times \omega^2 \quad \text{...... Formula (3)}$$

$$Fk = k \times e \quad \text{...... Formula (4)}$$

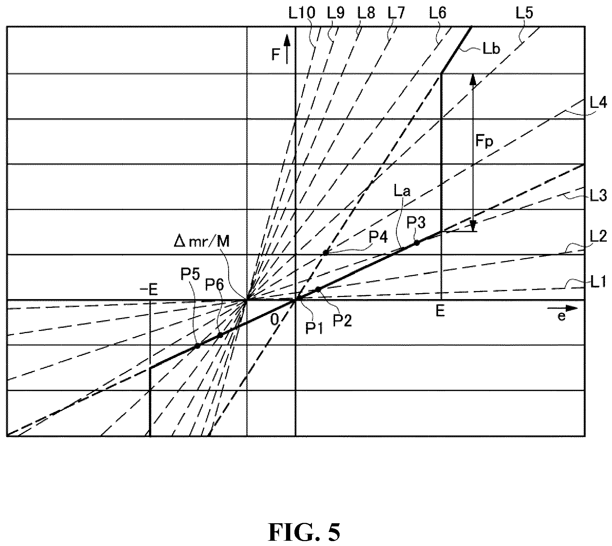

FIG. 5 is a chart illustrating the above formulas by setting amplitude (displacement) e to be a horizontal axis and setting a vibration force F including the inertia force Fi and the elastic force Fk to be a longitudinal axis. Straight lines L1 to L10 as shown in the figure are inertia characteristic straight lines representing a relation of Formula (3). The straight line La is an elastic characteristic straight line representing a relation of Formula (4). Intersections of the straight lines represent the amplitude (displacement) e and the vibration force F at the angular frequency $\omega$.

For the inertia characteristic straight lines L1 to L10, slopes thereof are in direct proportion to the square of the angular frequency co, and intercepts (intersections) of the inertia characteristic straight lines and the transverse axis are expressed by $\Delta m \times r/M$. The inertia characteristic straight lines L1 to L10 are respectively straight lines recorded in

EP 3 406 783 A1

a manner of having different angular frequencies co, thereby showing a situation that relations between the amplitude e as shown by the straight lines L1, L2, L3, ..., L10 and the inertia force Fi are changed with the increase of the angular frequency ω. Therefore, the intersection of each of the inertia characteristic straight lines L1 to L10 and the elastic characteristic straight line La represents the relation between the amplitude e of each angular frequency ω and the vibration force F.

Under a condition of considering a period of starting the washing and dewatering drum 4 (see FIG. 1) and gradually increasing the angular frequency co, the amplitude e and the vibration force F have the following changes.

Firstly, under a condition that the angular frequency is the angular frequency ω corresponding to the inertia straight line L1, an amplitude e and a vibration force F which correspond to an intersection P1 of the inertia characteristic straight line L1 and the elastic characteristic straight line La are generated. Under a condition that the angular frequency ω is increased to an angular frequency corresponding to the inertia characteristic straight line L2, an amplitude e and a vibration force F which correspond to an intersection P2 of the inertia characteristic straight line L2 and the elastic characteristic straight line La are generated. Then, under a condition that the angular frequency ω is increased to an angular frequency corresponding to the inertia characteristic straight line L3, an amplitude e and a vibration force F which correspond to an intersection P3 of the inertia characteristic straight line L3 and the elastic characteristic straight line La are generated. Under a condition that the angular frequency ω is further increased from this state into a state which will be turned to the inertia straight line L4, an amplitude e corresponding to an intersection of the inertia straight line L4 and the inertia characteristic straight line La is extremely large.

However, as mentioned above, in the present embodiment, the vibration limiting member 81 constituting the displacement transmission unit 8 is arranged in the clearance E between the outer drum 3 and the main body 2, and the vibration limiting member 81 is connected with the main body 2 through the flexible ropes 82 and the extension springs 6, so that the outer drum 3 may be pulled back to the central direction with a larger force under the action of the extension springs 6. At this time, since the extension springs 6 are pre-imparted with the initial tension Fp, a force equal to the initial tension Fp may be additionally applied and act on the outer drum 3 in case of slight extension. Namely, under a condition that the outer drum 3 vibrates sharply and moves a distance larger than the clearance E, a relatively large elastic force is generated dramatically due to the initial tension Fp, and the spring constant k is increased. Namely, in a region where the amplitude e is greater than the clearance E, the elastic characteristic straight line La migrates to an elastic characteristic straight line Lb having a larger slope.

Therefore, the amplitude e is reduced dramatically if the amplitude and the vibration force are changed into an amplitude e and a vibration force F which correspond to an intersection P4 of the inertia straight line L4 and the elastic characteristic straight line Lb. It represents that the low-order natural vibration number of the outer drum 3 is changed and has a deflection from the angular frequency ω under the action of the extension springs 6, so that the vibration is weakened.

The low-order natural vibration number of the outer drum 3 may return to the original state again as the amplitude e is less than the clearance E, but the angular frequency ω becomes greater than the low-order natural vibration number at this time, and may maintain a state of a small amplitude e in case of no resonance occurrence. Namely, even if the angular frequency ω is increased to be corresponding to intersections P5 and P6 of inertia straight lines, such as the inertia straight lines L5 and L6, and the elastic characteristic straight line La, the amplitude e may not exceed the clearance E, and is maintained at a relatively low level.

It should be noted that the elastic characteristic straight line Lb is not required to pass through the original point as long as the elastic characteristic straight line Lb may represents a relation that the spring constant k is increased dramatically. Namely, an extension amount ΔL and the size of the clearance E (see FIG. 2) during application of the initial tension Fp may be properly changed only if the initial tension Fp is large enough.

As mentioned above, the vibration limiting member 81 constituting the displacement transmission unit 8 is arranged in the clearance E between the outer drum 3 and the main body 2, and the vibration limiting member 81 is connected with the main body 2 through the flexible ropes 82 and the extension springs 6, so that the outer drum 3 is abutted against the vibration limiting member 81 under a condition that the angular frequency co, namely the rotating speed, is close to the low-order natural vibration number of the outer drum 3 and the amplitude e is greater than the clearance E within a period when the washing and dewatering drum 4 is enabled to rotate and accelerated to a specified rotating speed. The extension springs 6 connected with the vibration limiting member 81 through the flexible ropes 82 extend by a tension exceeding the initial tension Fp to enable the low-order natural vibration number to be increased, so that the vibration may be weakened. Then, the low-order natural vibration number returns to the original state under a condition that the amplitude e is less than the clearance E, but the rotating speed of the washing and dewatering drum 4 may be increased to be far away from the low-order natural vibration number, so that strengthening of the vibration may be suppressed.

Therefore, the vibration and the noise may be suppressed to a relatively low degree, and the environment around the arrangement place of the washing machine 1 may be improved. Then, even if the clearance between the main body 2 and the outer drum 3 is set to be small, damage to the main body 2 and the outer drum 3 due to fierce collision caused by the vibration also can be prevented, so that the main body 2 may be miniaturized relative to the outer drum 3 to miniaturize the washing machine 1. In addition, under a condition of maintaining the size of the main body 2 and making the outer drum 3 large in size, the washing capacity may be increased without changing the size of the entire washing machine 1.

Furthermore, when the displacement of the outer drum 3 is increased, the extension springs 6, in addition to the elastic supporting units 5 to 5, used for obtaining the resilience capable of enabling the outer drum 3 to return to the central direction, make use of the initial tension of the spring main bodies 60, so that the initial tension is easy to control without using components except for the spring main bodies. Then, since the vibration limiting member 81 is connected with the spring elements 6A, the assemble may be easier in a state of not allowing the spring members of the extension springs 6 to extend beyond the natural lengths.

Furthermore, since the vibration limiting member 81 has an annular shape, even if the outer drum 3 has a displacement towards any direction intersected with the rotating shaft Ra, the outer drum 3 may be in contact with the vibration limiting member 81 and move because a displacement amount towards the horizontal direction exceeds the clearance E. Therefore, the elastic supporting strength of the outer drum 3 may be changed to be deviated from the natural vibration number under the action of one extension spring 6 or the plurality of extension springs 6 to 6 opposed to the displacement direction.

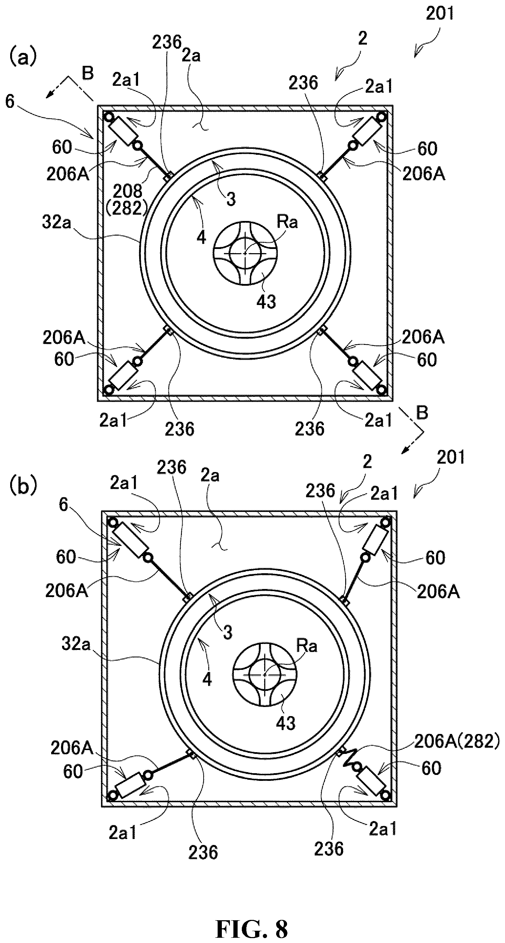

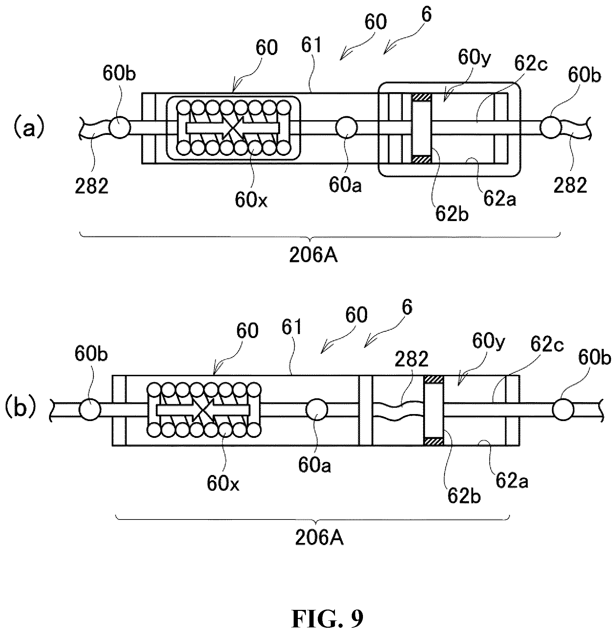

It should be noted that in the present embodiment, the spring main body 60 of each extension spring 6 adopts the structure only using the spring member 60x as shown in FIG. 3. However, instead of the spring main body 60, a spring main body 60 provided with an attenuation apparatus 60y described below according to FIG. 9 or a spring main body 60 provided with a limiting shaft body 72 described below according to FIG. 8 also may be adopted.

(Second embodiment)

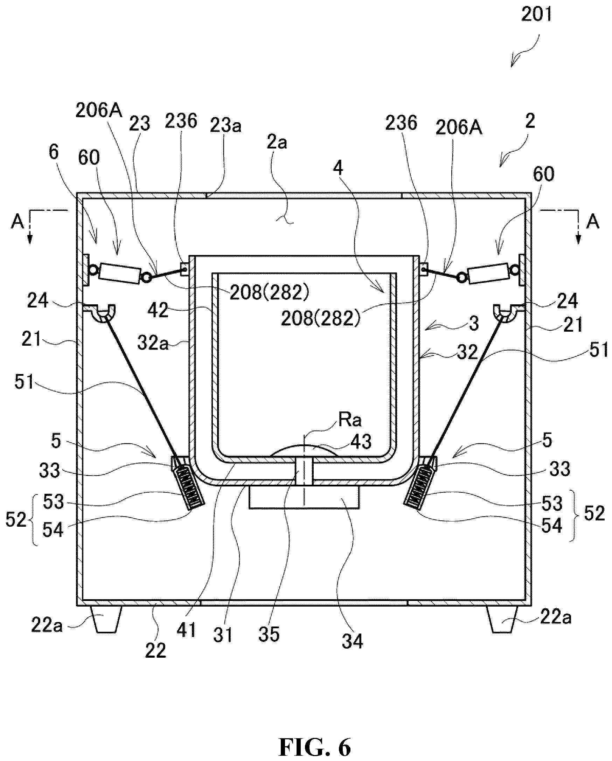

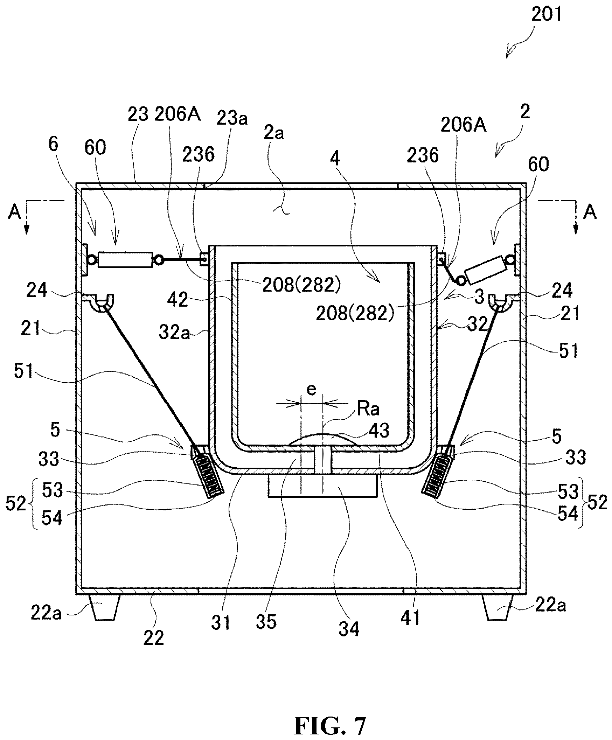

FIG. 6 corresponding to FIG. 1 of the above-mentioned first embodiment is a longitudinal section view illustrating a washing machine 201 according to a second embodiment of the present invention. FIG. 7 is a diagram illustrating a state after the outer drum 3 has a displacement in a horizontal direction. Then, FIG. 8(a) and FIG. 8(b) respectively correspond to FIG. 2(a) and FIG. 2(b) of the above-mentioned first embodiment. Namely, FIG. 8(a) is a sectional view of a position A-A in FIG. 6. FIG. 6 is a sectional view of a position B-B in FIG. 8(a).

The washing machines 201 as shown in FIG. 6 and FIG. 8(a) are all the same as the washing machine 1 described in the first embodiment (FIG. 1 to FIG. 5) except for structures described below, so that same reference numerals are provided for the same parts, and descriptions are omitted.

The washing machine 201 is not provided with a member equivalent to the vibration limiting member 81 (see FIG. 1) of the first embodiment. A displacement transmission unit 208 is composed of four flexible ropes 282 to 282. Furthermore, one end of each of the flexible ropes 282 to 282 is arranged between a position close to the upper part of the outer drum 3 and a corner part 2a1, and is provided with one of fixing members 236 to 236 integrally arranged at one of four positions of the upper part of the peripheral surface 32a of the side plate 32 of the outer drum 3. The flexible ropes 282 to 282 are composed of ropes made of metal difficult to extend and retract, and have flexibility, so that force transmission only occurs in an extension direction, and basically does not occur in a compression direction.

Then, the other ends of the flexible ropes 282 to 282 are connected with the main body 2 through the extension springs 6 as shown in FIG. 9. The spring main body 60 including a spring member 60x having a preset initial tension of each extension spring 6 is connected with at least one flexible rope 282 constituting the displacement transmission unit, so as to form a "spring element" 206A to exert the function. At this time, since lengths of all the flexible ropes 282 to 282 are excessive, the extension springs 6 to 6 still may not extend beyond the natural lengths.

The extension spring as shown in (a) of the same figure is as follows: the attenuation apparatus 60y is integrally assembled in a sleeve pipe 61 of the spring main body 60. The attenuation apparatus 60y is an oil damper type apparatus formed in a manner of enabling a piston 62b to do reciprocating motion in a cylinder chamber 62a. One end of the spring member 60x is connected with a mounting part 60b outside the sleeve pipe, and the other end of a piston rod 62c constituting the attenuation apparatus 60y is connected with the mounting part 60b outside the sleeve pipe 61. The other end of the spring member 60x is connected with one end of the piston rod 62c through an internal connecting portion 60a. Furthermore, the spring element 206A composed of the spring main body 60 of this structure and the flexible rope 282 is connected between the main body 2 and the outer drum 3 to attenuate a displacement transmitted through the flexible rope 282 used as the displacement transmission unit.

FIG. 7 and FIG. 8(b) illustrate a state that the outer drum 3 moves from the above-mentioned state to a direction intersected with the rotating shaft Ra. When the displacement e of the outer drum 3 towards the horizontal direction is increased to be greater than a preset specified value, the flexible rope 282 opposed to the displacement direction is tightened to transmit the displacement of the outer drum 3 to the extension spring 6. At this time, the looseness of the flexible rope 282 opposed to the tightened flexible rope 282 is increased, but no force would be applied to the outer drum 3. It should be noted that, in order to transmit the displacement of the outer drum 3 to the extension spring 6 through the tightened flexible rope 282, the specified value used as a necessary displacement amount is equivalent to the clearance E of the first embodiment (see FIG. 2).

Through the adoption of the above-mentioned structure, firstly, like the basic action of the first embodiment, under conditions that the outer drum 3 shakes sharply and the displacement e is greater than the specified value, the displacement is transmitted to the extension spring 6 through the flexible rope 282 constituting the displacement transmission unit 208, and the extension spring 6 may apply a force to the outer drum 3 to pull the outer drum 3 back towards a direction opposed to the displacement. Therefore, like the situation of the first embodiment, the elastic supporting strength of the outer drum 3 is changed dramatically to enable the natural vibration number to be deviated and weaken the vibration.

Then, since the displacement transmission unit 208 is composed of the flexible rope 282, the structure may be simplified relative to the first embodiment and the manufacturing cost is reduced.

In addition, the function of the attenuation apparatus 60y also contributes to suppressing the vibration. Namely, according to FIG. 5, as mentioned above, after the intersection of the inertia characteristic straight line L1 and the elastic characteristic straight line La migrates in a manner of P1 to P2 to P3, under a condition that the outer drum 3 vibrates sharply and moves for a distance larger than the clearance E, the amplitude e and the vibrating force F exert a relatively large elastic force due to the initial tension Fp, and the spring constant k is increased, so that in a region that the amplitude e is greater than the clearance E, the elastic characteristic straight line La migrates to an elastic characteristic straight line Lb having a larger slope.

Therefore, the amplitude and the vibration force are changed into an amplitude e and a vibration force F which correspond to an intersection P4 of the inertia straight line L4 and the elastic characteristic straight line Lb, and the amplitude e is reduced dramatically. It represents that the low-order natural vibration number of the outer drum 3 is changed and has a deflection from the angular frequency ω under the action of the extension springs 6, so that the vibration is weakened.

At this time, since the attenuation apparatuses 60y work at the same time to enable the vibration to become attenuated vibration, and the maximum value of resonance is reduced, the actual vibration amplitude is further reduced, and excessive shaking of the outer drum 3 may be further suppressed in advance.

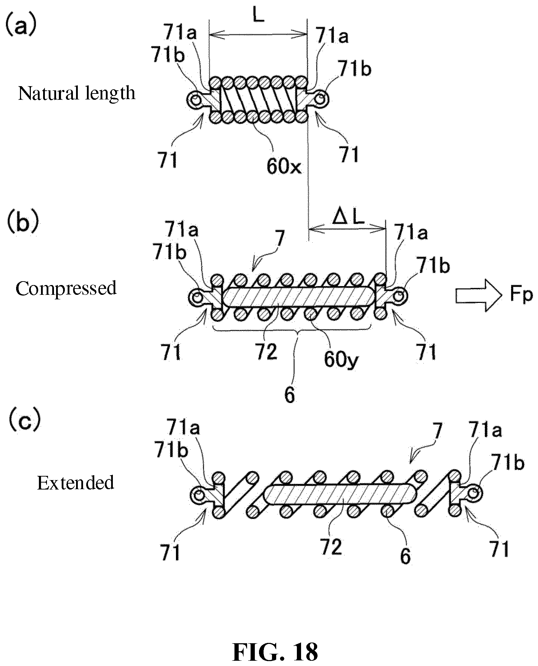

It should be noted that in the present embodiment, although the extension spring adopts the structure as shown in FIG. 9(a), such a structure described below according to FIG. 9(b) that the flexible rope 282 is arranged in the sleeve pipe of the spring main body 60, and such a structure that only the initial tension of the spring member 60x is used according to FIG. 3 also may be adopted. Or, such a structure that the initial tension is set by using a pressurization setting unit 7 described below according to FIG. 18 also may be adopted.


(Third embodiment)

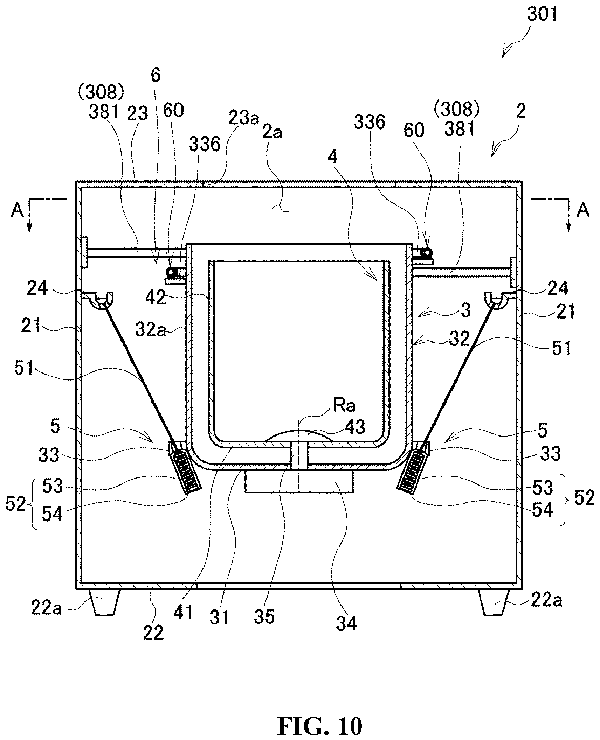

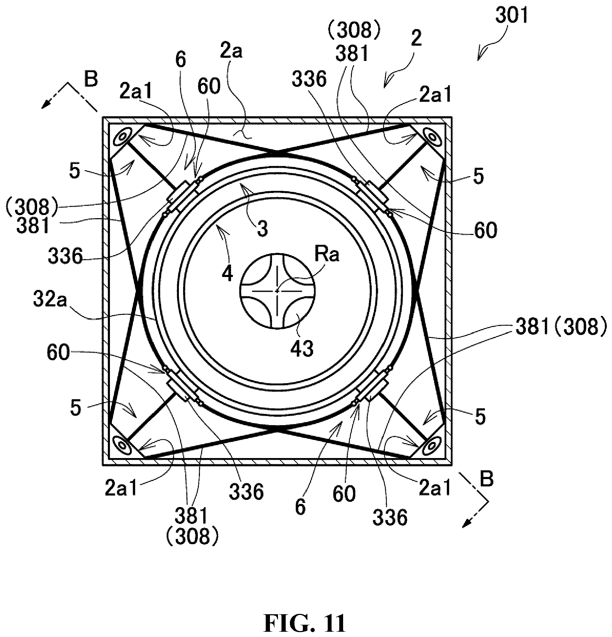

FIG. 10 corresponding to FIG. 1 of the first embodiment is a longitudinal section view illustrating a washing machine 301 according to a third embodiment of the present invention. Then, FIG. 11 corresponds to FIG. 2(a) of the first embodiment. Namely, FIG. 11 is a sectional view of a position A-A in FIG. 10. FIG. 10 is a sectional view of a position B-B in FIG. 11.

Since the washing machines 301 as shown in FIG. 10 and FIG. 11 are the same as the washing machine 1 described in the first embodiment (FIG. 1 to FIG. 5) except for structures described below, same reference numerals are provided for the same parts, and descriptions are omitted. It should be noted that FIG. 10 is a diagram that omits one part of a displacement transmission unit 308 described below.

The washing machine 301 is not provided with a member equivalent to the vibration limiting member 81 (see FIG. 1) of the first embodiment. The displacement transmission unit 308 is composed of strip-shaped bodies 381 to 381. Four spring main bodies 60 constituting the extension springs 6 to 6 are arranged at the periphery of the outer drum 3. The spring main bodies 60 here are described by only adopting the spring main bodies of the spring members 60x having an initial tension as shown in FIG. 3, but spring main bodies provided with the spring members 60x and the attenuation apparatuses 60y as shown in FIG. 9(a) also may be adopted. Any spring main body is acceptable. Both ends of the spring main bodies 60 constituting these extension springs 6 to 6 are respectively connected with the flexible strip-shaped bodies 381, so as to form spring elements 206A.

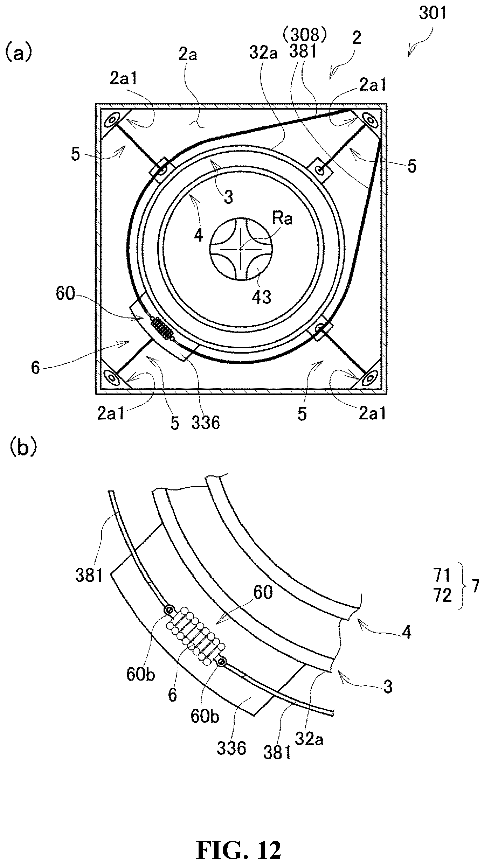

FIG. 12(a) is a diagram of a simplified representation only having one extension spring 6 arranged on the washing machine 301 as shown in FIG. 11. In addition, FIG. 12(b) is a diagram illustrating the periphery of the extension spring 6 as shown in FIG. 11(a) in an amplified manner.

As shown in FIG. 12(a) and FIG. 12(b), the extension spring 6 is arranged on a base 336 of the peripheral surface 32a of the outer drum 3, so as to be limited in the up-down direction. Both ends of the extension spring 6 are respectively connected with one end of the strip-shaped body 381 and one end of another strip-shaped body 381. The other ends of the strip-shaped bodies 381 are fixed at the corner parts 2a1 of the main body 2.

The extension spring 6 and the strip-shaped bodies 381 connected in series with the extension spring 6 are long enough, and have a specified clearance from the peripheral surface 32a of the outer drum 3 to cover about one third of the periphery of the outer drum 3. In this state, the extension spring 6 may not extend beyond the natural length.

It should be noted that one third of the outer drum 3 is not always covered by the extension spring 6 and the strip-shaped bodies 381 and 381 connected in series with the extension spring 6 as long as limitation to all directions orthogonal to the rotating shaft Ra is completed through all the extension springs 6 to 6 (see FIG. 11).

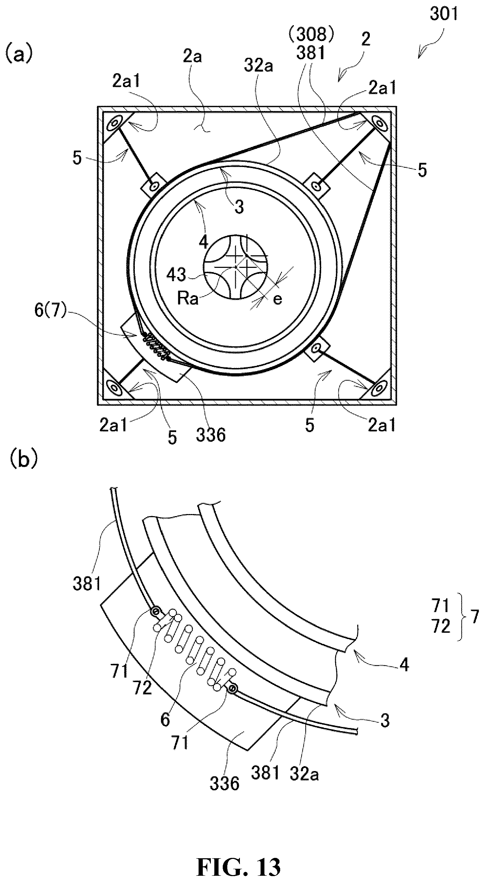

FIG. 13(a) and FIG. 13(b) are diagrams illustrating a state that the outer drum 3 moves from the above-mentioned state towards a direction (which is a lower left direction in the figure) intersected with the rotating shaft Ra. Under a condition that the displacement e towards the horizontal direction of the outer drum 3 is increased to be greater than the preset specified value, the strip-shaped body 381 fixed to the corner part 2a1 opposed to the displacement direction is tightened to transmit the displacement of the outer drum 3 to the extension spring 6. It should be noted that, in order to transmit the displacement of the outer drum 3 to the extension spring 6 through the tightened strip-shaped body 381, the above-mentioned specified value used as a necessary displacement amount is equivalent to the clearance E of the first embodiment (see FIG. 2).

Under a condition that the extension spring 6 slightly extends based on the natural length, and the relative positions of the mounting parts 60b at both ends have a displacement, forces equal to the initial tension Fp may be additionally applied to the strip-shaped bodies 381 and 381.

Through the adoption of the above-mentioned structure, under a condition that the outer drum 3 shakes sharply and has a displacement amount greater than the specified value, the displacement is transmitted to the extension spring 6 through the strip-shaped body 381 constituting the displacement transmission unit 308, and the extension spring 6 may apply a force to the outer drum 3 to pull the outer drum 3 back towards a direction opposed to the displacement. Due to the four groups of strip-shaped bodies 381 and extension springs 6 (see FIG. 11) which are evenly arranged around the outer drum 3 serving as a center, no matter what direction the outer drum 3 moves, the displacement may be transmitted to the extension spring 6. Therefore, like the situation of the first embodiment, the elastic supporting strength of the outer drum 3 is changed dramatically to enable the natural vibration number to be deviated and weaken the vibration. It should be noted that at least two groups of strip-shaped bodies 381 and extension springs 6 are provided, and oppositely arranged around the rotating shaft Ra serving as a center, thereby achieving the same effect as mentioned above.

In addition, in a process that the displacement of the outer drum 3 is transmitted to the extension springs 6 through the displacement transmission unit 308 to enable the extension springs 6 to extend, and then in a process that the full lengths of the extension springs 6 are shortened along with the returning of the outer drum 3 towards the original position, the inner sides of the strip-shaped bodies 381 slide on the peripheral surface 32a of the outer drum 3 to generate friction resistance to also achieve an effect of a damper. Therefore, through the use of the strip-shaped bodies 381 like that in the present embodiment, the vibration may be further suppressed.

It should be noted that in the present embodiment, the spring main body 60 of each extension spring 6 is described by adopting the spring main body only provided with the spring member 60x as shown in FIG. 3, but a spring main body provided with the spring member 60x and the attenuation apparatus 60y which are described in FIG. 9, and a spring main body for imparting the initial tension by using a limiting shaft body described below according to FIG. 18 also may be adopted together.

(Fourth embodiment)

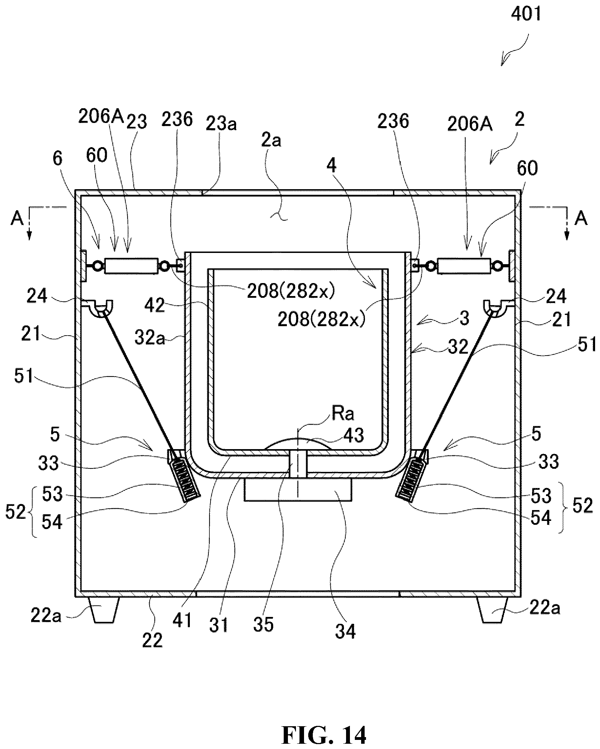

FIG. 14 is a diagram illustrating a variation example of the above-mentioned second embodiment. In the above-mentioned second embodiment, the displacement transmission unit, namely the flexible rope 282, which is externally mounted on the spring main body 60 as shown in FIG. 9(a) is bent, and the spring assembly 206A is connected between the main body 2 and the outer drum 3, so that members 282x of the mounting portions 60b mounted at both ends may be configured as non-flexible members by arranging the flexible rope 282 used as the displacement transmission unit into a position between the spring member 60x and the attenuation apparatus 60y, which constitute the spring main body 60, of the spring element 206A as shown in (b) of the same figure and realizing integration. Namely, as shown in FIG. 14, the spring element 206A looking like in a non-loosened state may be rectilinearly mounted between the main body 2 and the outer drum 3. Through the adoption of this structure, within a range that the internal flexible rope 282 as shown in FIG. 9(b) does not extend, the outer drum 3 is allowed to vibrate to a certain extent. The spring member 60x and the attenuation apparatus 60y of the extension spring 6 start to work when the flexible rope 282 extends.

Through the adoption of this structure, integration of the spring element 206A may be promoted, and operation and mounting programs also may be improved.

(Fifth embodiment)

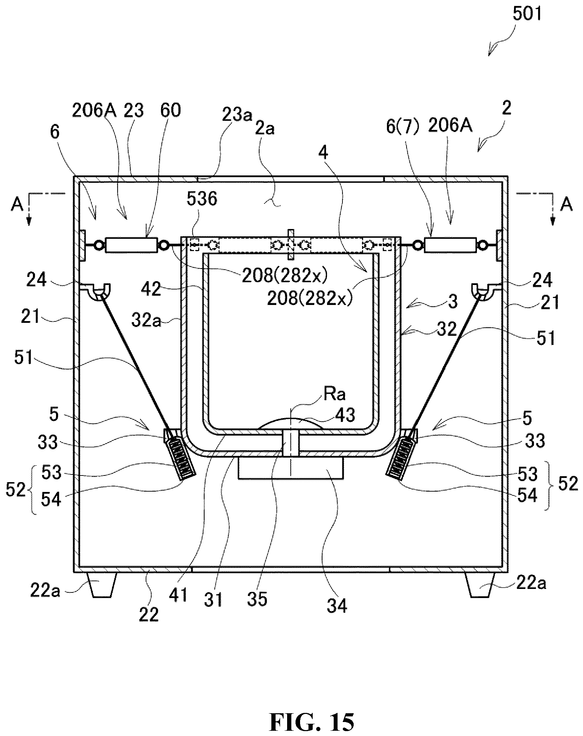

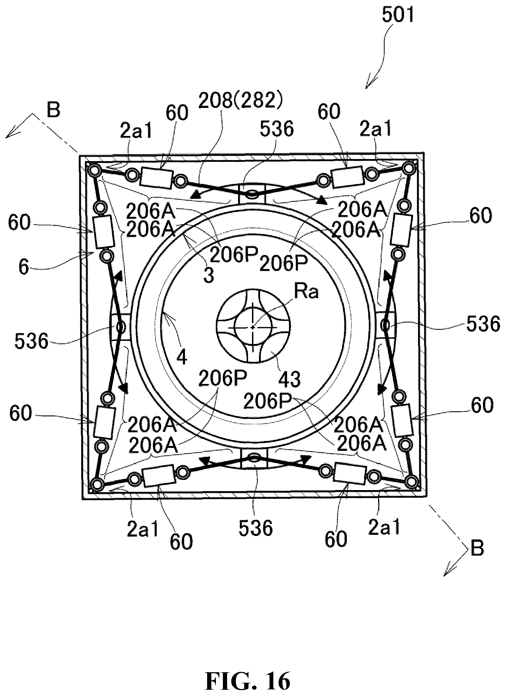

FIG. 15 corresponding to FIG. 1 of the above-mentioned first embodiment is a longitudinal section view illustrating a washing machine 501 according to a fifth embodiment of the present invention. Then, FIG. 16 corresponds to FIG. 2(a) of the above-mentioned first embodiment. Namely, FIG. 16 is a sectional view of a position A-A in FIG. 15. FIG. 15 is a sectional view of a position B-B in FIG. 16.

The washing machines 501 as shown in FIG. 15 and FIG. 16 are the same as the washing machine 1 described in the first embodiment, the second embodiment and the fourth embodiment except for structures described below, so that same reference numerals are provided for the same parts, and descriptions are omitted.

The washing machine 501 is not provided with a member equivalent to the vibration limiting member 81 (see FIG. 1) of the first embodiment. The spring elements 206A including the spring main bodies 60 of the extension springs 6 and the flexible ropes 282 are the same as those in FIG. 14. Flanges 536 are integrally arranged at four positions at the periphery of the outer drum 3 at equal intervals. These flanges 536 and two closest corners in four corners (corner parts 2a1 to 2a1) of the main body 2 are respectively connected through the spring elements 206A between which the spring main bodies 60 are clamped. The spring main bodies 60 of the extension springs 6 are provided with spring members 60x having a preset initial tension, and form the "spring elements" 206A through at least one flexible rope 282 constituting the displacement transmission unit (see FIG. 9(b)).

Furthermore, one end of each spring element 206A is mounted at each corner part 2a1 of the main body 2, and the other end of the spring element 206A extends towards an approximate tangential direction and is mounted on one flange 536 of the outer drum 3. Namely, two spring elements 206A pairwise extend towards different approximate tangential directions relative to the periphery of the outer drum 3 from one corner part 2a1. One pair of spring elements 206A forming a spring body 206P is further arranged opposite to the rotating shaft Ra and located at another corner part 2a1 side diagonal to the corner part 2a1. At least this group of spring bodies 206P and 206P form the extension spring 6. In the present embodiment, one group of spring bodies 206P and 206P are further arranged between the corner part 2a1 of the main body 2 on the other diagonal and another flange 536 of the outer drum 3. The total two groups of spring bodies 206P and 206P form the extension springs 6.

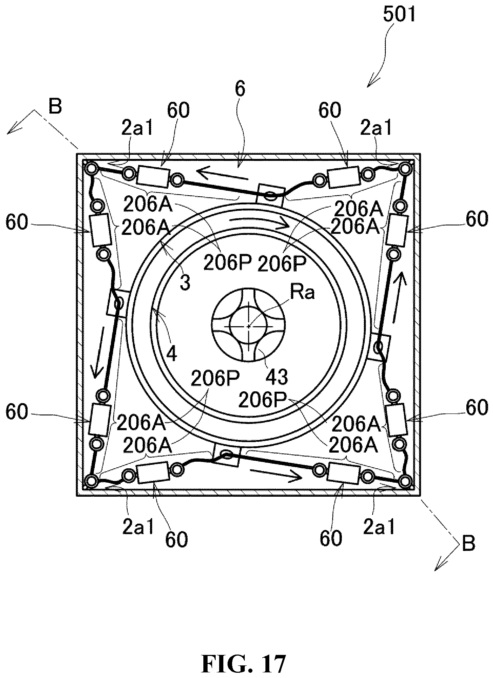

Through the adoption of the above-mentioned structure, under a condition that the outer drum 3 shakes sharply around the rotating shaft Ra along a rotating direction as shown in FIG. 17, and has a displacement amount greater than a specified value, the displacement is transmitted in the following way: the spring element 206A, which is located on a preceding side of the rotating direction, of one pair of spring elements 206A and 206A constituting the spring body 206P is enabled to extend, and the spring element 206A located on the hysteresis side of the rotating direction is enabled to retract. The spring main body 60 of the spring element 206A on the extending side may apply a force to the outer drum 3 to pull the outer drum 3 back towards an original position opposite to the displacement. The spring bodies 206P including such a pair of spring elements 206A are arranged at the diagonal positions around the rotating shaft Ra in a grouping manner, so that a counteracting force for counteracting rotation of the outer drum 3 towards any one of the left side and the right side may be applied to weaken the vibration, and the washing and dewatering drum 4 can operate reliably.

In addition, for such arrangement of the spring bodies 206P, under a condition that the outer drum 3 has a displacement towards the horizontal direction as described in the second embodiment, and the displacement amount is greater than the specified value, the displacement is transmitted in a manner of enabling one pair of spring elements 206A which is connected to the far side of the outer drum 3 and constitutes the spring body 206P to extend and enabling one pair of spring elements 206A which is connected to the close side of the outer drum 3 and constitutes the spring body 206P to retract, so that the spring main bodies 60 of the spring elements 206A on the extending side may apply the force to the outer drum 3 to pull the outer drum 3 back to the original position opposite to the displacement, and driving at the resonance point may be avoided.

Then, in the present embodiment, since two groups of such spring bodies 206P are also arranged at other diagonal positions, the vibration attenuation effect can be further enhanced.

It should be noted that in the present embodiment, although the extension springs 6 adopt the springs having the attenuation function as shown in FIG. 9, particularly springs provided with built-in limiting ropes 282 as shown in (b) of the same figure, the spring types as shown in (a) of the same figure also may be adopted. Furthermore, the springs only composed of the spring members 60x as shown in FIG. 3 may be adopted.

Then, in above embodiments, for the initial tension of the spring main bodies 60 of the extension springs, limiting shaft bodies as shown in FIG. 18 also may be adopted. The limiting shaft bodies 72 are arranged inside the extension springs 6 as shown in the figure along the long side directions of the extension springs 6.

FIG. 18 is a sectional view illustrating an example of adopting a pressurization setting unit 7 to impart the initial tension of the extension springs 6. Specifically, FIG. 18(a) is a diagram illustrating a situation that the extension spring 6 has a natural length L. Furthermore, FIG. 18(b) is a diagram illustrating a state that a pressure Fp constituting the initial tension is applied to both ends of the extension spring 6 to enable the extension spring 6 to extend only by $\Delta L$ and keep this length.

Each limiting shaft body 72 is inserted into one extension spring 6, so that a relative position between circular plate portions 71a and 71a of spring end limiting parts 71 and 71 is limited through the limiting shaft body 72. In this way, the extension spring 6 is maintained in such a state that the initial tension Fp is applied through the spring end limiting parts 71 and 71 and the extension spring 6 only extends by ΔL from the natural length L. Namely, the spring end limiting parts 71 and 71 and the limiting shaft body 72 form the pressurization setting unit 7 for setting the initial tension Fp for the extension spring 6 to exert the function.

FIG. 18(c) is a diagram illustrating a state that the extension spring 6 further extends from the state as shown in FIG. 18(b). As shown in the figure, under a condition that the pressurization setting unit 7 applies a force exceeding the pressure Fp to both ends of the extension spring 6, the extension spring 6 extends. Namely, the pressurization setting unit 7 limits a deformation towards a direction which becomes shorter on a basis of a state with a set pressure Fp while allowing the extension spring 6 to deform towards the extension direction,

Since the displacement of the outer drum 3 is transmitted to the extension spring 6, when the extension spring 6 slightly extends on the basis of the set pressure, limitation of the pressurization setting unit 7 is released. Therefore, the force which is borne by the spring member of the extension spring and is equal to the initial tension Fp acts on both ends of the extension spring 6, and the force for pulling the outer drum 3 back to the original position opposite to the displacement may be applied to the outer drum 3 through the vibration limiting member 81.

The above describes embodiments of the present invention, but specific structures of all the parts are not limited to the above-mentioned embodiments.

For example, although the attenuation apparatuses 60y are arranged in the spring main bodies 60 in the above-mentioned embodiments, the attenuation apparatuses 60y may be also disposed outside the spring main bodies 60.

In addition, in above embodiments, the outer drum 3 is configured to take the inner drum supported inside as the washing and dewatering drum 4, while the present invention may be well applied under a condition of requiring the inner drum to rotate at the high speed. Even if the inner drum is only used as a washing drum or a dewatering drum, the above-mentioned structure is also applicable.

In addition, in above embodiments, the axial direction of the outer drum 3 is set to be a vertical direction. However, even if the axial direction is a slantways upward direction, the outer drum 3 is also applicable to the present invention. In addition, the present invention also may achieve the same effects as mentioned above even for a drum type washing machine in which the axial direction of the outer drum 3 is the horizontal direction.

Other structures may be subjected to various variations without departing from the scope of the technical spirit of the present invention.

Reference numerals in the drawings:

1: washing machine;
2: main body;
2a: internal space;
2a1: corner part;
3: outer drum;
4: washing and dewatering drum (inner drum)
5: elastic supporting unit;
6: extension spring;
6A: spring element;
7: pressurization setting unit;
8, 208, 308: displacement transmission unit;
34: motor;
60: spring main body;
60x: spring member;
60y: attenuation apparatus;
82: flexible rope;
101: washing machine;
206A: spring element;
206P: spring body;
282: flexible rope;
301, 401, 501: washing machine;
Fp: initial tension;
Ra: rotating shaft.

**Claims**

**1.** A washing machine, comprising:

a main body having an internal space;
an outer drum arranged in the internal space of the main body;
an inner drum arranged inside the outer drum and supported in a free rotation manner;
a motor disposed on the outer drum and capable of enabling the inner drum to rotate; and
a plurality of elastic supporting units for elastically supporting the outer drum to the main body,

wherein the washing machine comprises:

a plurality of extension springs arranged between the outer drum and the main body and capable of applying a counteracting force to the outer drum to enable the outer drum to return to an original position when a displacement of the outer drum is transmitted to the extension springs; and
a displacement transmission unit capable of transmitting the displacement of the outer drum to the extension springs only when the displacement of the outer drum is larger than a specified value,
wherein the extension springs have a preset initial tension.

2. The washing machine according to claim 1, wherein

the extension springs comprise at least one group of spring bodies arranged in a manner of being in axial symmetry about a rotating shaft of the inner drum;
each spring body is formed by combining a pair of spring elements; each spring element comprises a spring main body having the preset initial tension and at least one flexible rope constituting the displacement transmission unit; and
one end of each spring element of each spring body is mounted at a corner part of the main body, and the other end of the each spring element is fixed in a different approximate tangential direction of the outer drum.

3. A washing machine, comprising:

a main body having an internal space;
an outer drum arranged in the internal space of the main body;
an inner drum arranged inside the outer drum and supported in a free rotation manner;
a motor disposed on the outer drum and capable of enabling the inner drum to rotate; and
a plurality of elastic supporting units for elastically supporting the outer drum to the main body,

wherein the washing machine comprises:

a plurality of extension springs arranged between the outer drum and the main body and capable of applying a counteracting force to the outer drum to enable the outer drum to return to an original position when a displacement of the outer drum is transmitted to the extension springs;
a displacement transmission unit capable of transmitting the displacement of the outer drum to the extension springs only when the displacement of the outer drum is larger than a specified value; and
a plurality of attenuation apparatuses for attenuating the displacement transmitted by the displacement transmission unit,
wherein the extension springs have a preset initial tension.

4. The washing machine according to claim 3, wherein

the extension springs comprise at least one group of spring bodies arranged in a manner of being in axial symmetry about a rotating shaft of the inner drum;
each spring body is formed by combining a pair of spring elements; each spring element comprises a spring main body having the preset initial tension and at least one flexible rope constituting each displacement transmission unit; and
one end of each spring element of each spring body is mounted at a corner part of the main body, and the other end of the each spring element is fixed in a different approximate tangential direction of the outer drum.

**FIG. 1**

**FIG. 2**

**FIG. 3**

(a)

(b)

**FIG. 4**

**FIG. 5**

**FIG. 6**

**FIG. 7**

**FIG. 8**

**FIG. 9**

**FIG. 10**

**FIG. 11**

FIG. 12

(a)

301

(308)
2a    32a    381    2

2a1                        2a1

5                                    5

3

4

43

Ra                    e

6(7)

2a1        336        5            2a1
                5

(b)

381

71
72  }7

71
72

4

6

71                3

336    381    32a

**FIG. 13**

**FIG. 14**

**FIG. 15**

**FIG. 16**

**FIG. 17**

**FIG. 18**

# INTERNATIONAL SEARCH REPORT

| International application No. |
| --- |
| PCT/CN2016/111800 |

## A. CLASSIFICATION OF SUBJECT MATTER

D06F 37/20 (2006.01) i

According to International Patent Classification (IPC) or to both national classification and IPC

## B. FIELDS SEARCHED

Minimum documentation searched (classification system followed by classification symbols)

D06F

Documentation searched other than minimum documentation to the extent that such documents are included in the fields searched

Electronic data base consulted during the international search (name of data base and, where practicable, search terms used)

CNABS, CNTXT, EPODOC, DWPI: spring, displacement, vibration, value, point, greater, exceed, surpass, case, box, shell, tub, tank, basket, pressure spring, leaf spring, shift, specified value, set value, threshold, big, exceed, bucket, outer barrel, bucket, washtub

## C. DOCUMENTS CONSIDERED TO BE RELEVANT

| Category* | Citation of document, with indication, where appropriate, of the relevant passages | Relevant to claim No. |
| --- | --- | --- |
| X | WO 2015180473 A1 (HAIER ASIA INT CO., LTD. et al.) 03 December 2015 (03.12.2015) description, page 5, 11 line to page 7, 16 line, page 13, 2 line to page 14, 30 line, and figures 1, 9 and 10 | 1-4 |
| A | CN 1683655 A (LG ELECTRONICS TIANJIN ELECTRIC APPLIANC CO., LTD.)) 19 October 2005 (19.10.2005) the whole document | 1-4 |
| A | CN 101397735 A (PANASONIC CO., LTD.) 01 April 2009 (01.04.2009) the whole document | 1-4 |
| A | JP 10328479 A (ELECTROLUX ZANUSHI SPA) 15 December 1998 (15.12.1998) the whole document | 1-4 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 23 March 2017 | 10 April 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer GUO, Xu Telephone No. (86-10) 62084600 |
| --- | --- |

Form PCT/ISA /210 (second sheet) (July 2009)

## INTERNATIONAL SEARCH REPORT
Information on patent family members

International application No.

PCT/CN2016/111800

| Patent Documents referred in the Report | Publication Date | Patent Family | Publication Date |
|---|---|---|---|
| WO 2015180473 A1 | 03 December 2015 | JP 2015223283 A | 14 December 2015 |
| CN 1683655 A | 19 October 2005 | None | |
| CN 101397735 A | 01 April 2009 | CN 201268793 Y | 08 July 2009 |
| | | JP 4844525 B2 | 28 December 2011 |
| | | JP 2009082317 A | 23 April 2009 |
| | | CN 101397735 B | 12 October 2011 |
| JP 10328479 A | 15 December 1998 | EP 0879913 A1 | 25 November 1998 |
| | | IT 1294131 B1 | 22 March 1999 |

Form PCT/ISA/210 (patent family annex) (July 2009)

**EP 3 406 783 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011240041 A
- JP 3984630 B